# EUROPÄISCHE PATENTANMELDUNG

(11) **EP 0 964 387 A2**
(43) Veröffentlichungstag der Anmeldung: **15.12.1999**
(21) Anmeldenummer: 99110825.9
(22) Anmeldetag: 05.06.1999
(51) Int. Cl.: G10K 11/178

(54) **Verfahren und Vorrichtung zur Beeinflussung von, von Fensterscheiben stammenden Geräuschen**

(30) Priorität: 13.06.1998 DE 19826171
(71) Anmelder: DaimlerChrysler AG, 70567 Stuttgart (DE)
(72) Erfinder: Bartels, Peter, 88090 Immenstaad (DE); Borchers, Ingo Dr., 88690 Uhldingen-Mühlhofen (DE); Hartweg, Martin Dr., 89155 Erbach (DE); Michel, Josef Dr., 89081 Ulm (DE); Tomaschko, Silvia Dr., 89075 Ulm (DE); Wang, Ping Dr., 89075 Ulm (DE)

(57) **Zusammenfassung**

Die Erfindung betrifft ein Verfahren und eine Vorrichtung zur Beeinflussung von von Fensterscheiben (3), insbesondere von Fensterscheiben von Fahrzeugen, stammenden Geräuschen, vorzugsweise einer in einem Fahrgastraum wahrnehmbaren Geräuschkulisse, wobei die Fensterscheiben (3) unter Zuhilfenahme einer Dichtung in einem Fensterrahmen (2) eingefaßt sind. Im Bereich des Übergangs zwischen Fensterrahmen (2) und Fensterscheibe (3), vorzugsweise in der Dichtung ist zumindest ein Piezoelement (4) zwischengelegt. Mit dem Piezoelement (4) wird die Gesamtenergie und/oder die Zusammensetzung der Frequenzen der über den Fensterrahmen (2) und/oder über die Fensterscheibe (3) übertragenen Schwingungen verändert.

## Beschreibung

Die Erfindung betrifft ein Verfahren und eine Vorrichtung zur Beeinflussung von von Fensterscheiben stammenden Geräuschen, insbesondere von Fensterscheiben von Fahrzeugen, wobei die Fensterscheiben unter Zuhilfenahme einer Dichtung in einem Fensterrahmen eingefaßt sind. Derartige Fensterscheiben, welche aus Glas oder Kunststoff gefertigt sind, werden allgemein verwendet und werden hier als bekannt unterstellt.

So ist bspw. aus der DE 31 41 482 A1 eine Fensterscheibe bekannt, die einen umlaufenden Kantenschutz aus dauerelastischem Kunststoff aufweist, welcher bei Einbau der Fensterscheibe in einen Fensterrahmen gleichzeitig als Dichtung dient. Derartige Fenster werden bspw. beim Bau von Gebäuden oder von Fahrzeugen, wie Autos, Flugzeugen, Zügen oder Schiffen verwendet. Bei starken Windgeräuschen übertragen derartige Fenster allerdings zumindest eine bestimmten Anteil der Windgeräusche in das Innere eines Raumes, was u.U. als störend empfunden werden kann.

Aus der US 5,332,061 A1 ist Verfahren zur Unterdrückung von in die Karosserie eingeleiteten Vibrationen und ein entsprechendes Fahrzeug bekannt. Die betreffenden eingeleiteten Vibrationen stammen vom Motor und werden an den Verbindungspunkten des Motors mit der Karosserie übertragen. Zu Dämpfung dieser Vibrationen weist das Fahrzeug Shaker, also mechanische Schwingungserreger auf, die im Bereich von zumindest einigen Verbindungspunkten des Motors mit der Karosserie angeordnet sind. Beim Betreiben des Motors werden die Shaker in Abhängigkeit von der Motorendrehzahl bei den Resonsanzfrequenzen gegenphasig zu den vom Motor kommenden Vibrationen erregt, wodurch die Übertragung der eingeleiteten Vibrationen zumindest gedämpft werden. Die entsprechenden Frequenzen und deren Amplituten für die Sekundär-Schwingungen werden hierbei einem zuvor niedergelegten Datenfeld entnommen.

Aus der US 5,434,783 A1 ist ein Fahrzeug bekannt, bei dem die innerhalb einer Fahrgastzelle hörbare Geräuschkulisse durch Schallwellen beeinflußt wird. Neben normalen Lautsprechern wird hier auch ein Piezoelement verwendet, das die Karosserie zumindest bereichsweise zu Schwingungen anregt und dadurch zur Aussendung von Schallwellen beeinflußt; d.h. das Piezoelement wirkt wie die Spule eines Lautsprechers, während die Karosserie die schwingende Membran darstellt. Mit dem vorbekannten Verfahren und der vorbekannten Vorrichtung wird eine Verbesserung des subjektiven Empfindens innerhalb der Fahrgastzelle erreicht.

Eine weiterführende Ausbildung der obigen Entwicklung zur Beeinflussung des subjektiv wahrgenommenen Fahreindrucks ist aus der DE 195 31 402 A1 bekannt. Gemäß dieser Schrift wird in Abhängigkeit eines Parameters und hierbei insbesondere der Motordrehzahl und/oder der Geschwindigkeit nicht nur der Luftschall, sondern auch der mit dem Körper wahrgenommenen Körperschall bzw. Vibrationen beeinflußt. Hierzu werden je nach Größe des Parameters aus einem Datenfeld bestimmte Daten ausgelesen und unter Zuhilfenahme von Schwingungserregern in u.a. auch körperwahrnehmbaren Sekundär-Schwingungen umgesetzt. Durch diese Maßnahmen können in Verbindung mit der Beeinflussung des akustisch wahrgenommenen Luftschalls sowohl positive als auch negative Interferenzen der künstlichen Sekundär-Schwingungen mit den beim Betreiben des Fahrzeuges fahrzeugseitig sich bildenden Primär-Schwingungen erzeugt werden. Die Interferenzen können je nach Wunsch den wahrgenommenen Eindruck verringern oder aber einen bestimmten Eindruck, bspw. ein Schalten bei mit einem stufenlosen Getriebe versehenen Fahrzeug, vortäuschen.

Die Aufgabe der Erfindung ist es, ein Verfahren und eine Vorrichtung zu entwickeln, mit dem/der auf eine neuartige Weise eine Beeinflussung von von Fensterscheiben her kommenden und insbesondere in einen Innenraum übertragenen Geräusche beeinflußt werden können.

Die Aufgabe wird erfindungsgemäß mit einem Verfahren mit den Verfahrensschritten des Anspruchs 1 bzw. mit einer Vorrichtung mit den Merkmalen des Anspruchs 12 gelöst. Durch die Anordnung von Piezoelementen in der sowie schon vorhandenen Dichtung kann auf einfache Weise die Übertragungsfunktion für Schwingungen zwischen dem Fensterglas und dem Fensterrahmen verändert werden. Dies kann insbesondere zur Geräuschverringerung innerhalb eines umschlossenen Raumes verwendet werden. In der gleichen Weise ist es auch möglich, die nach außen übertragenen Geräusche bevorzugt minimierend zu beeinflussen. Bei gesteuerter Anregung dieser Piezoelemente kann mit dieser Erfindung aber auch in vorteilhafter Weise eine Fensterscheibe als randseitig angeregter Lautsprecher verwendet werden. Hierbei bildet die randseitige Dichtung den Erreger und das Fensterglas die entsprechende Membran dieses "gläsernen Lautsprechers".

Weitere sinnvolle Ausgestaltungen der Erfindung sind den jeweiligen Unteransprüchen entnehmbar. Im übrigen wird die Erfindung anhand von in den Zeichnungen dargestellten Ausführungsbeispielen näher erläutert. Dabei zeigt
- Fig. 1: eine Aufsicht auf ein Fenster mit rahmenseitig angeordneten Piezoelementen,
- Fig. 2: einen Schnitt durch eine aktive Dichtung mit statistisch darin angeordneten Piezoelementen und zugehörigen elektrischen Kontakten,
- Fig. 3: einen Schnitt durch eine aktive Dichtung mit orientiert darin angeordneten Piezoelementen sowie zugehörigen elektrischen Kontakten,
- Fig. 4: einen Schnitt und eine entsprechende Ausschnittsvergrößerung durch eine aktive Dichtung mit orientiert darin angeordneten Piezoelementen, piezoelektrischen Sensoren sowie zugehörigen elektrischen Kontakten,
- Fig. 5: einen quer zur Fläche der Fensterscheibe geführten Schnitt durch eine in einem Fensterrahmen eingebaute Fensterscheibe mit einer aktiven und einer passiven Dichtung,
- Fig. 6: einen Schnitt entsprechend Figur 5, wobei das Fenster zwei aktiven Dichtungen aufweist,
- Fig. 7: einen Schnitt entsprechend Figur 5, wobei das Fenster eine aktive und eine passive Dichtungen sowie einseitig angeordnete Sensoren aufweist,
- Fig. 8: einen Schnitt entsprechend Figur 5, wobei das Fenster zwei aktiven Dichtungen sowie beidseitig angeordnete Sensoren aufweist, und
- Fig. 9: einen Schnitt entsprechend Figur 8, wobei das Fenster zusätzlich an seiner Stirnseite noch eine aktive Dichtungen sowie einen Sensor aufweist.

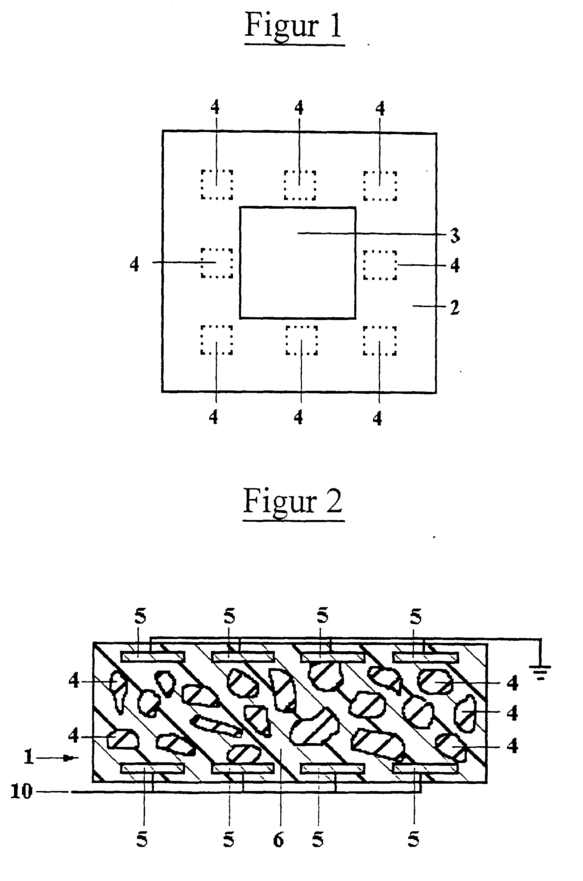

In Figur 1 ist ein Fenster in Aufsicht dargestellt, das eine in einem Fensterrahmen 2 gefaßte Fensterscheibe 3 aufweist, wobei im Übergangsbereich des Fensterrahmens 2 und der Fensterscheibe 3 eine Dichtung zwischen der Fensterscheibe 3 und dem Fensterrahmen 2 eine Dichtung angeordnet ist.

Desweiteren sind randseitig an den Flachseiten der Fensterscheibe 3 und zwar im Bereich des Übergangs zwischen dem Fensterrahmen 2 und der Fensterscheibe 3 getrennt und unabhängig voneinander angeordnete Piezoelemente 4 angeordnet, die zumindest mittelbar an dem Fensterrahmen 2 und der Fensterscheibe 3 anliegen.

Die Piezoelemente können - je nach Vorteile im jeweiligen Einsatzfall - bspw. massiv sein und/oder aus mehreren aufeinander gelegten Schichten einzelner Lagen von insbesondere folien- und/oder scheibenartigen Piezokeramiken gebildet sind.

Die Piezoelemente 4 sind bevorzugt an Orten mit der höchsten Modendichte angeordnet; d.h. an den Orten, an denen aufgrund einer übertragenen Schwingung der höchste Kraftfluß und/oder die größte Amplitude bzw. die höchste modale Dichte der übertragenen Schwingung zu erwarten ist.

Die in der Figur 1 dargestellte Anordnung bildet eine Vorrichtung zur Beeinflussung von Geräuschen, die auf das Fenster zurückzuführen sind. Bei diesen Geräuschen kann es sich bspw. um Windgeräusche handeln, die über die Fensterscheibe 3 als Schwingungen übertragen werden. Ferner können es auch Schwingungen sein, die über den Fensterrahmen 2 übertragen werden und die Fensterscheibe 3 zu Schwingungen, die u.a. als Geräusch wahrnehmbar sind, erregen. Vor allem bei Kraftfahrzeugen wie Flugzeugen, Bahnen und Bussen sowie insbesondere bei Lastkraft- und/oder Personenkraftwagen sind diese Geräusche für die im Innenraum wahrnehmbare Geräuschkulisse von besonderem Interesse. Gleiches gilt für die Schallabstrahlung nach außen.

Anstelle der aus Figur 1 bekannten Anordnung können die Piezoelemente 4 zweckmäßigerweise auch in eine zumeist sowie schon vorhandenen Dichtung integriert werden. Eine derartige Dichtung wird im Gegensatz zu einer normalen, passiven Dichtung 8 im folgenden aktive Dichtung 1 genannt.

Einige Möglichkeiten zur Ausbildung von derartig aktiven Dichtungen 1 sind in den Figuren 2 bis 4 dargestellt.

Figur 2 zeigt eine Dichtung 1 mit einer Matrix 6 aus vorzugsweise elektrisch leitendem Kunststoff, in den mehrere Piezoelemente 4 in belibiger Größe, Orientierung und körperlicher Gestaltung eingebettet sind. Eine derartige Anordnung wird i.a. als 0-3-Piezokeramik-Polymer-Komposit bezeichnet. Im Bereich der Wandungen sind günstigerweise elektrische Kontakte angeordnet, die durch elektrische Steuerleitungen 10 mit einer Steuereinheit (nicht dargestellt) verbunden sind.

Durch die elektrischen Kontakte können die einzelnen Piezoelemente 4 zum einen gezielt angesteuert werden und zum anderen ist es möglich, eine elektrische Spannung abzugreifen, die z.B. dadurch entstehen kann, das übertragenen Schwingungen einen Drucks auf die Piezoelemente 4 ausüben und diese deformieren.

In einem einfachen Fall kann bei einer Dichtung 1 auch auf die elektrischen Kontakte 5 verzichtet werden. In diesem Fall führt eine auf übertragene Schwingungen zurückgehende Deformation der Piezoelemente 4 zwar auch zu einer elektrischen Spannung. Die elektrische Spannung wird hier dann aber in eine Erwärmung der Dichtung umgesetzt, womit das System ebenfalls gedämpft ist.

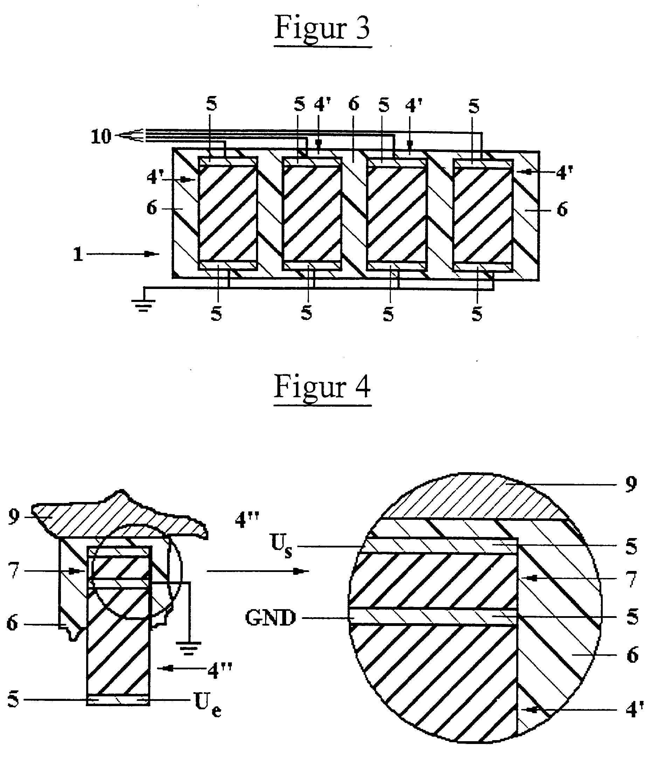

In Figur 3 ist eine aktive Dichtung 1 mit einer Kunststoff-Matrix 6 dargestellt, in der mehrere Piezoelemente 4 eingebettet sind. Im Gegensatz zu dem Ausführungsbeispiel nach Figur 2 sind diese Piezoelemente von bestimmter Größe und Form und zusätzlich orientiert angeordnet. Eine derartige Anordnung wird i.a. als 1-3-Piezokeramik-Polymer-Komposit bezeichnet.

Im Bereich der Wandungen der Dichtung 1 sind ebenfalls elektrische Kontakte angeordnet, die gleichfalls durch elektrische Steuerleitungen 10 mit einer Steuereinheit (nicht dargestellt) verbunden sind. Im Unterschied zu der Dichtung nach Figur 2 ist bei der Dichtung nach Figur 3 ein jedes Piezoelement einzeln elektrisch kontaktiert und somit auch getrennt einzeln ansteuerbar.

Über die elektrischen Kontakte können die einzelnen Piezoelemente 4 gezielt zu Sekundär-Schwingungen mit. gewünschten Frequenzen und Amplituden erregt werden. Die Skundär-Schwingungen können mit den übertragenen Schwingungen interferiert und/oder diesen überlagert werden. Im Falle einer negativen Interferenz können die zuvor ohne diese Beeinflussung wahrgenommenen Geräusche zumindest verringert werden, während bei einer Überlagerung bspw. eine gewünschte Beschallung mit Musik oder einer gesprochenen Nachricht möglich ist.

Die Piezeelemente 4' der Dichtung 1 sind vorzugsweise in der Art von Pieostaks ausgebildet und/oder lamellenartig und insbesondere fluchtend hintereinander in der Dichtung 1 angeordnet.

Bei der Herstellung der Dichtung 1 werden die so angeordneten Piezoelemente 4' sinnvollerweise vor dem Einlassen in den die Matrix 6 der Dichtung bildenden Kunststoff noch elektrisch kontaktiert. Damit die Dichtung 1 auch weiterhin ihren üblichen Zweck erfüllt, ist der die Matrix 6 bildende Kunststoff bevorzugt aus einem Polymer und insbesondere aus einem Elastomer gefertigt.

In Figur 4 ist eine aktive Dichtung 1 mit einer Kunststoff-Matrix 6 dargestellt, in der mehrere Piezoelemente 4'' mit zugeordneten piezoelektrischen Sensoren 7 eingebettet sind. Die Piezoelemente 4'' gleichen weitgehend denen nach Figur 3.

Allerdings ist ihnen in Richtung ihrer aktiven Achse ein vorzugsweise piezoelektrischer Sensor 7 nachgeordnet. Der Sensor weist einen gemeinsamen und einen zusätzlichen elektrischen Kontakt 5 auf. Der gemeinsame Kontakt 5, der zwischen dem Piezoelement 4' und dem Sensor 7 angeordnet ist, ist zweckmäßigerweise geerdet bzw. auf ein elektrisches Null-Potential gelegt.

Über die elektrischen Kontakte können die einzelnen Piezoelemente 4'' gezielt zu Sekundär-Schwingungen mit gewünschten Frequenzen und Amplituden erregt werden. Die Sekundär-Schwingungen können mit den übertragenen Schwingungen interferiert und/oder diesen überlagert werden. Im Falle einer negativen Interferenz können die zuvor ohne diese Beeinflussung wahrgenommenen Geräusche zumindest verringert werden, während bei einer Überlagerung bspw. eine gewünschte Beschallung mit Musik oder einer gesprochenen Nachricht möglich ist.

In vorteilhafter Weise kann bei einer derartigen Dichtung 1 mit dem Sensor 7 eine nach gewünschter Anregung der Piezoelemente 4'' verbleibende Restschwingung ermittelt und entsprechend gesteuert werden. Mit der zugehörigen Elektronik bildet also dieses Piezo-/Sensorelement 4'' einen Regelkreis aus. Aus diesem Grund ist es u.a. günstig, den Sensor 7 in Kraftflußrichtung und/oder parallel zu der Auslenkungsrichtung der zu erwartenden Amplitude der übertragenen Schwingung nach dem erregbaren Piezoelement 4'' anzuordnen.

Durch die einzelne elektrische Kontaktierung eines jeden Sensors 7 und der jeweiligen Piezoelemente 4'' kann der Ermittlung der Restschwingung und die Einleitung der Sekundär-Schwingung mit einer guten Auflösung und Flexibilität erfolgen.

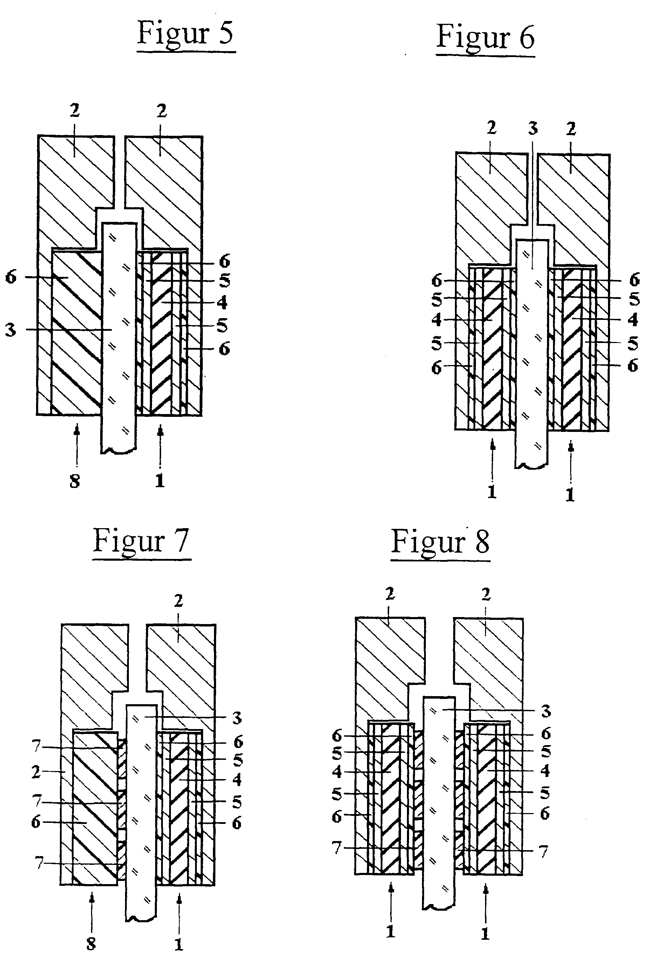

Mögliche Anordnungen der in den vorhergegangenen Figuren beschriebenen aktiven Dichtung sind in den Figuren 5 bis 9 dargestellt, wobei bei allen diesen Ausführungsbeispielen eine Fensterscheibe 3 in ihrem Randbereich auf ihren beiden Flachseiten von dem Fensterrahmen umfaßt ist.

Figur 5 zeigt einen quer zur Fläche der Fensterscheibe geführten Schnitt durch eine in einem Fensterrahmen 2 eingebaute Fensterscheibe 2. Der Fensterrahmen 2 ist im Bereich der Überlappung des Fensterrahmens 2 mit der Fensterscheibe 3 zweiteilig ausgeführt, damit die Fensterscheibe 3 randseizig auf ihren beiden Flachseiten umfaßt ist. Im Bereich der Überlappung des Fensterrahmens 2 mit der Fensterscheibe 3 ist links eine passive Dichtung 8 und rechts eine aktive Dichtung 1 angeordnet. Die passive Dichtung 8 ist von herkömmlicher Bauart, während die aktive Dichtung eine der in den Figuren 2 bis 4 dargestellten Bauweisen aufweisen kann. Am vielseitigsten verwendbar ist hier insbesondere die in Figur 4 Art dargestellte einer aktiven Dichtung 1.

Der in Figur 6 dargestellte Schnitt entspricht weitgehend demjenigen nach Figur 5, wobei hier allerdings auf beiden Flachseiten der Fensterscheibe 3 aktive Dichtungen 1 angeordnet sind. Wie im vorherigen Ausführungebeispiel nach Figur 5 die können die aktiven Dichtungen 1 eine der in den Figuren 2 bis 4 dargestellten Bauweisen aufweisen kann. Am vielseitigsten verwendbar ist hier ebenfalls insbesondere die in Figur 4 dargestellte Art einer aktiven Dichtung 1.

Bei dem Schnitt nach Figur 7 entspricht der Aufbau demjenigen nach Figur 5, jedoch sind hier zwischen der passiven Dichtung 8 und der Flachseite der Fensterscheibe 3 Sensoren 7 angeordnet.

Bei dem Schnitt nach Figur 8 entspricht der Aufbau demjenigen nach Figur 6, jedoch sind hier zwischen den aktiven Dichtungen 8 und den Flachseiten der Fensterscheibe 3 Sensoren 7 angeordnet.

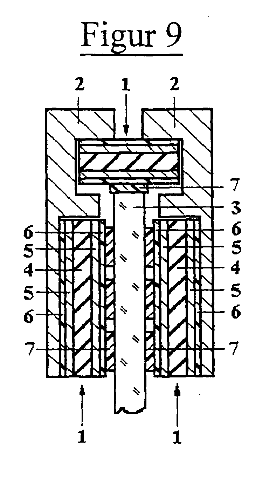

Bei dem Schnitt nach Figur 9 entspricht der Aufbau demjenigen nach Figur 8, jedoch weist das Fenster hier noch an der Stirnseite des Fensterscheibe 3 eine weitere aktive Dichtung 1 mit zugehörigem Sensor 7 auf. Hierdurch sind die Möglichkeiten zur Einflußnahme auf die übertragenen Schwingungen noch weiter verbessert.

Für die Ausführungsbeispiele nach den Figuren 7, 8 und 9 sind insbesondere aktive Dichtungen 1 geeignet, wie sie anhand der Figuren 2 und 3 beschrieben sind.

Insgesamt kann bei der Erfindung durch den Einsatz der Piezoelemente 4, 4' und 4'' die Übertragungsfunktion zwischen dem Fensterrahmen 2 und der Fensterscheibe 3 sowie umgekehrt verändert werden. Bei der Verwendung direkt geregelt steuerbarer Piezoelemente bzw. Dichtungen mit derartigen Piezoelementen kann dies in vorteilhafter Weise sogar variabel und reversibel erfolgen, so daß die Möglichkeiten zur Beeinflussung und hierbei insbesondere zur Verstimmung verbessert sind.

Im folgenden wird das erfindungsgemäße Verfahren anhand von zwei Beispielen beschrieben. In beiden Fällen handelt es sich bei dem Fenster um ein Fenster eines Fahrzeugs, das von Luft umströmt wird und bei dem über den Fensterrahmen 2 Schwingungen auf die Fensterscheibe 3 übertragen werden. Beide Anregungen der Fensterscheibe 3 ( strömende Luft und von der Karosserie übertragene Schwingungen) bilden einen Teil der im Innenraum des Kraftfahrzeugs, insbesondere eines Automobils, eines Flugzeugs oder eines Zugwagons wahrnehmbaren und bei niederen Frequenzen sogar spürbaren Geräuschkulisse.

### Beispiel 1

Bei einer Vorrichtung gemäß Beispiel 1 weist das Fenster beidseitig eine Dichtung ähnlich der in Figur 1 dargestellten Dichtung auf, wobei in dieser Dichtung keine elektrischen Kontakte für die Piezoelemente 4 angeordnet sind. Das Beispiel 2 betrifft ein Fenster mit beidseitig der Fensterscheibe 3 angeordneter aktiver Dichtung 1, wobei diese Dichtung derjenigen nach Figur 4 entspricht.

Durch turbulent strömende Luft bilden sich Druckschwankungen entlang der außenliegenden Flachseite des Fensters auf, die die Scheibe zu Schwingungen erregen. Diese Schwingungen bewirken im Bereich des Fensterrahmens sich verändernde Druckverläufe bzw. Kraftflüsse in der Dichtung 1. Die sich verändernden Druckverläufe bzw. Kraftflüsse bilden denjenigen Teil der übertragenen Schwingungen, deren Anregung von außen kommt. Der andere Teil der übertragenen Schwingung wird von der Karrosserie über den Fensterrahmen 2 auf die Fensterscheibe übertragen. Auch diese übertragenen Schwingungen bewirken im Bereich des Fensterrahmens 2 sich verändernde Druckverläufe bzw. Kraftflüsse in der Dichtung 1.

Durch diese Druckschwankungen bzw. Kraftflüsse wird das Kristallgitter der in der Dichtung 1 angeordneten Piezoelemente 4 entgegen ihrer Ruheladung verändert. Die Veränderung aus der Ruhelage ist mit einer Energieaufnahme verbunden, welche Energie der übertragenen Schwingung entzogen und in elektrische Energie umgewandelt wird. Diese Energie wird anschließen in der Form vom Wärme an den Kunststoff der Matrix 6 der Dichtung weitergegeben. Insgesamt ist durch diesen Vorgang die Gesamtenergie und/oder die Zusammensetzung der Frequenzen der über den Fensterrahmen 2 und/oder über die Fensterscheibe 3 übertragenen Schwingungen verringert. Die Verringerung der Gesamtenergie der übertragenen Schwingung stellt eine Dämpfung dar und bewirkt eine Verringerung der von der Fensterscheibe 3 kommenden wahrnehmbaren Geräusche.

### Beispiel 2

Bei einer Vorrichtung gemäß Beispiel 2 weist das Fenster beidseitig der Fensterscheibe 3 aktive Dichtungen 1 auf, wobei diese Dichtungen 1 einer aktiven Dichtung 1 entsprechen, wie sie in Figur 4 dargestellt ist.

Wie schon bei Beispiel 1 wird durch diese Druckschwankungen bzw. Kraftflüsse das Kristallgitter der in der Dichtung 1 angeordneten Piezoelemente 4 entgegen ihrer Ruheladung verändert.

Gleichfalls wird die so übertragenen Schwingung von den Sensoren aufgenommen. Durch eine nicht dargestellt, aber hinreichend bekannte Auswerteelektronik und die bekannten mathematischen Algorithmen (Fourier-Transformation usw.) kann die Zusammensetzung der Schwingung hinsichtlich ihrer Frequenzen und ihrer dazugehörigen Amplituden und Phasen ermittelt werden.

Aufgrund der ermittelten Werte für die übertragene Schwingung werden nun Daten generiert, mit denen die Piezoelemente angesteuert und zu einer Sekundär-Schwingung erregt werden. Bei der Sekundär-Schwingung können alle vorliegenden Frequenzen aber auch nur diskrete Frequenzen berücksichtigt werden. Bei der Beschränkung auf diskrete Frequenzen sind der bauliche und der logistische Aufwand und damit auch die Kosten für eine erfindungsgemäße Vorrichtung und ein erfindungsgemäßes Verfahren gesenkt.

Die künstlich erzeugte Sekundär-Schwingung wird mit der übertragenen Schwingung interferiert. Die Gesamtenergie der nach der Interferenz verbleibende Restschwingung ist zumindest geringer als die Gesamtenergie der ursprünglich vorliegenden übertragenen Schwingung. Die Verringerung der Gesamtenergie der übertragenen Schwingung stellt eine Dämpfung dar und bewirkt eine Verringerung der von der Fensterscheibe 3 kommenden wahrnehmbaren Geräusche. Die verbleibende Restschwingung kann ebenfalls durch die Sensoren gemessen werden. Hierbei kann insbesondere wie schon zuvor bei der übertragenen Schwingung die Restschwingung entsprechend beeinflußt werden. Es handelt sich also insgesamt um eine Regelstrecke.

Durch die 'in situ' - Ermittlung der real vorliegenden übertragenen Schwingung kann die Sekundär-Schwingung immer in Abhängigkeit zu der übertragenen Schwingung verändert werden.

Anstelle der Ermittlung der real vorliegenden übertragenen Schwingung kann zur Erzeugung der Sekundär-Schwingungen stellvertretend auch eine exemplarisch ermittelte übertragene Schwingung, die insbesondere von einem Parameter wie der Drehzahl, dem Kurbelwellenwinkel und/oder der Last usw. herangezogen werden. In diesem Fall werden dann die zur Erzeugung der Sekundär-Schwingung benötigten Daten idealerweise einem Datenspeicher entnommen, in dem sie niedergelegt sind. In besonderer Weise kann dieser Datensatz gezielt verändert werden. Dazu muß das entsprechende System als lernfähiges System ausgebildet sein.

Obwohl in den Ausführungsbeispielen immer beidseitig eingelassene Fensterscheiben 3 dargestellt sind, betrifft die Erfindung auch Fenster, die nur eine einseitig angeordnete Dichtung 1 aufweisen und ansonst in bekannter Weise einseitig bspw. durch verschraubungen usw. befestigt oder auch, wie insbesondere bei Seitenfenstern von Kraftfahrzeugen, in Führungsschienen geführt sind. Bei derartigen Fenstern handelt es sich in besonderer Weise um Fenster mit einseitig geklebten Fensterscheiben 3, wie sie heutzutage vorzugsweise im Automobilbereich gebräuchlich sind. Hierbei kann dann das Piezoelement 4, 4', 4'' und/oder der Sensor 7 bzw. die aktive Dichtung 1 im Bereich des Klebers angeordnet sein oder selbst mit verklebt werden.

Desweiteren betrifft die Erfindung auch Fenster mit mehreren Fensterscheiben (Doppelglasscheiben usw.), wobei es hier u.a. aus Fertigungsgründen sinnvoll sein kann, die Piezoelemente im Randbereich der Fensterscheiben und zwischen ihnen anzuordnen. Dies kann in Form von einzelnen Piezoelementen, insbesondere aber in der Form von aktiven Dichtungen erfolgen.

Sinnvollerweise wird im Fall einer aktiven und Kontakte 5 aufweisenden Dichtung 1 die Dichtung 1 vorzugsweise baulich aus gerichtet, bspw. unter Zuhilfenahme einer Nut angeordnet. Die gezielte Ausrichtung der Dichtung 1 dient dazu, daß die aktive Achse der Piezoelemente 4', 4'' zumindest in etwa in Richtung der höchsten Amplitude bzw. Modendichte und/oder in Kraftflußrichtung weist.

Desweiteren kann durch eine entsprechende körperliche Gestaltung der Dichtung 1 und der Aufnahme der Dichtung auch der Ort eines Piezoelementes 4', 4'' relativ zu seinem Einbauort festgelegt werden.

Ein besonderer Vorteil der Erfindung ist bei den ansteuerbaren Piezoelementen 4' und 4'' - insbesondere bei in den aktiven Dichtungen 1 angeordneten Piezoelementen 4' und 4'' - noch darin zu sehen, daß durch die Anordnung der Piezoelemente im Randbereich des Fensters und im Bereich des Überganges zwischen der Fensterscheibe 3 und dem Fensterrahmen 2 zur Beeinflussung der Geräuschkulisse nur kleine Hübe notwendig sind. Dies gilt sowohl bei der Erzeugung und/oder Erhöhung eines bestimmten Geräuscheindrucks als auch bei der Verminderung und/oder Unterdrückung bestimmter Geräusche.

Ferner ist aufgrund der kleinen Hübe und des geringen Verluststromes bei Piezoelementen der Energiebedarf bei dieser Einflußnahme günstigerweise gering.

## Patentansprüche

1. Verfahren zur Beeinflussung von von Fensterscheiben, insbesondere von Fensterscheiben von Fahrzeugen, stammenden Geräuschen, vorzugsweise einer in einem Fahrgastraum wahrnehmbaren Geräuschkulisse, wobei die Fensterscheiben unter Zuhilfenahme einer Dichtung in einem Fensterrahmen eingefaßt sind,
**dadurch gekennzeichnet,**
daß im Bereich des Übergangs zwischen Fensterrahmen (2) und Fensterscheibe (3), vorzugsweise in der Dichtung (1) zumindest ein Piezoelement (4, 4', 4'') angeordnet, insbesondere zwischengelegt wird und daß mit dem Piezoelement (4, 4', 4'') die Gesamtenergie und/oder die Zusammensetzung der Frequenzen der über den Fensterrahmen (2) und/oder über die Fensterscheibe (3) übertragenen Schwingungen verändert wird.

2. Verfahren nach Anspruch 1,
**dadurch gekennzeichnet**,
daß mit dem Piezoelement (4, 4', 4'') die Gesamtenergie der übertragenen Schwingungen Energie entzogen wird.

3. Verfahren nach Anspruch 1,
**dadurch gekennzeichnet**,
daß mit dem Piezoelement (4, 4', 4'') die Amplituden zumindest einer Frequenzen der übertragenen Schwingungen verändert, insbesondere verringert wird.

4. Verfahren nach Anspruch 1,
**dadurch gekennzeichnet**,
daß das Piezoelement (4, 4', 4'') von der Gesamtenergie der übertragenen Schwingungen angeregt wird.

5. Verfahren nach Anspruch 1,
**dadurch gekennzeichnet**,
daß das Piezoelement (4, 4', 4'') die übertragene Gesamtenergie der Schwingungen zumindest teilweise zuerst in eine elektrische Spannung und anschließend in Wärme umwandelt.

6. Verfahren zur Beeinflussung von von Fensterscheiben, insbesondere von Fensterscheiben von Fahrzeugen, stammenden Geräuschen, vorzugsweise einer in einem Fahrgastraum wahrnehmbaren Geräuschkulisse, wobei die Fensterscheiben unter Zuhilfenahme einer Dichtung in einem Fensterrahmen eingefaßt sind, **dadurch gekennzeichnet**,
daß im Bereich des Übergangs zwischen dem Fensterrahmen (2) und der Fensterscheibe (3), vorzugsweise in der Dichtung (1) zumindest ein Piezoelement (4, 4', 4'') angeordnet, insbesondere zwischengelegt wird, daß das Piezoelement (4, 4', 4'') zu einer Sekundär-Schwingung angeregt wird, daß die Sekundär-Schwingung mit der übertragenen Schwingung interferiert werden und daß durch die Interferenz die wahrnehmbare Schwingung verändert, vorzugsweise reduziert wird.

7. Verfahren nach Anspruch 6,
**dadurch gekennzeichnet**,
daß die Sekundär-Schwingung in Abhängigkeit zu der übertragenen Schwingung verändert wird.

8. Verfahren nach Anspruch 7,
**dadurch gekennzeichnet**,
daß bei einer Fensterscheibe (3) eines Kfz's die Sekundär-Schwingung in Abhängigkeit eines Parameters, insbesondere der Drehzahl und/oder dem Kurbelwellenwinkel eines Verbrennungsmotors verändert wird.

9. Verfahren nach Anspruch 7 oder 8,
**dadurch gekennzeichnet**,
daß die Daten zur Steuerung der Sekundär-Schwingung einem Datensatz entnommen werden.

10. Verfahren nach Anspruch 1 oder 6,
**dadurch gekennzeichnet**,
daß das Piezoelement (4, 4', 4'') im Bereich einer Amplitute bzw. im Bereich des höchsten Anpreßdruckes der übertragenen Schwingung angeordnet wird.

11. Verfahren nach Anspruch 1 oder 6,
**dadurch gekennzeichnet**,
daß mit dem Piezoelement (4, 4', 4'') die Übertragungsfunktion für die übertragene Schwingung verändert wird.

12. Vorrichtung zur Beeinflussung von von Fensterscheiben, insbesondere von Fensterscheiben von Fahrzeugen, stammenden Geräuschen, vorzugsweise einer in einem Fahrgastraum wahrnehmbaren Geräuschkulisse, wobei die Fensterscheiben unter Zuhilfenahme einer Dichtung in einem Fensterrahmen eingefaßt sind,
**dadurch gekennzeichnet**,
daß im Bereich eines Übergangs zwischen Fensterrahmen (2) und Fensterscheibe (3), vorzugsweise in der Dichtung (1) zwischen Fensterrahmen (2) und Fensterscheibe (3) zumindest ein Piezoelement (4, 4', 4'') angeordnet ist.

13. Vorrichtung nach Anspruch 12,
**dadurch gekennzeichnet**,
daß das Piezoelement (4, 4', 4'') mit einer Steuereinheit verbunden ist und daß das Piezoelement (4, 4', 4'') mit der Steuereinheit zu einer Sekundär-Schwingung errregbar ist.

14. Vorrichtung nach Anspruch 13,
**dadurch gekennzeichnet**,
daß die Vorrichtung einen Datenspeicher aufweist und daß die Daten zur Steuerung der Sekundär-Schwingung einem im Datenspeicher niedergelegten Datensatz entnehmbar sind.

15. Vorrichtung nach Anspruch 12,
**dadurch gekennzeichnet**,
daß ein Piezoelement (4, 4', 4'') im Bereich einer Amplitude der übertragenen Schwingung angeordnet ist.

16. Vorrichtung nach Anspruch 12,
**dadurch gekennzeichnet**,
daß mehrere Piezoelemente (4, 4', 4'') in einer Dichtung (1) angeordnet sind.

17. Vorrichtung nach Anspruch 12,
**dadurch gekennzeichnet**,
daß die Dichtung (1) elektrisch kontaktiert ist und daß die Kontakte (5) im Wandungsbereich der Dichtung (1) angeordnet sind.

18. Vorrichtung nach Anspruch 12,
**dadurch gekennzeichnet**,
daß die Dichtung (1) eine Matrix (6) aus Kunststoff, bevorzugt aus einem Polymer und besonders bevorzugt aus einem Elastomer aufweist.

19. Vorrichtung nach Anspruch 12,
**dadurch gekennzeichnet**,
daß die Piezoelemente (4) in der Dichtung (1) vereinzelt und beliebig verteilt angeordnet sind - im folgenden 0-3-Piezokeramik-Polymer-Komposit genannt -.

20. Vorrichtung nach Anspruch 12,
**dadurch gekennzeichnet**,
daß die Piezoelemente (4', 4'') in der Dichtung (1) vereinzelt und ausgerichtet angeordnet sowie elektrisch kontaktiert sind - im folgenden 1-3-Piezokeramik-Polymer-Komposit genannt -.

21. Vorrichtung nach Anspruch 12,
**dadurch gekennzeichnet**,
daß ein Piezoelement (4', 4'') mit seiner aktiven Achse in etwa parallel zu der Auslenkungsrichtung der zu erwartenden Amplitude der übertragenen Schwingung ausgerichtet ist.

22. Vorrichtung nach Anspruch 12,
**dadurch gekennzeichnet**,
daß ein Piezoelement (4', 4'') mit seiner aktiven Achse in etwa parallel zu der Richtung der von der übertragenen Schwingung eingeleiteten Kraft - im folgenden vereinfachend Kraftflußrichtung genannt - angeordnet ist.

23. Vorrichtung nach Anspruch 12,
**dadurch gekennzeichnet**,
daß in der Dichtung (1) Sensoren (7) für die Schwingungen angeordnet sind.

24. Vorrichtung nach Anspruch 12,
**dadurch gekennzeichnet**,
daß ein Piezoelement (4'') in zwei Sektoren unterteilt ist, wobei der eine Sektor ein Piezoaktor (4') und der andere Sektor der Sensor (7) ist.
